# EUROPÄISCHE PATENTANMELDUNG

(11) **EP 2 060 991 A1**
(43) Veröffentlichungstag der Anmeldung: **20.05.2009**
(21) Anmeldenummer: 07021707.0
(22) Anmeldetag: 08.11.2007
(51) Int. Cl.: G06F 21/02

(54) **Verfahren zum Übertragen von geheimen Daten auf ein Halbleiterbauelement, insbesondere auf einen Halbleiterchip**

(71) Anmelder: Secunet Security Networks Aktiengesellschaft, 45128 Essen (DE)
(72) Erfinder: Lindbauer, Marc, 80335 München (DE); Hettstedt, Gunnar, 85570 Markt Schwaben (DE); Grawunder, Torsten, 01326 Dresden (DE)
(74) Vertreter: Rohmann, Michael

(57) **Zusammenfassung**

Verfahren zum Übertragen von geheimen Daten auf ein Halbleiterbauelement, insbesondere auf einen Halbleiterchip, wobei das Halbleiterbauelement zumindest eine Kommunikationsschnittstelle sowie zumindest einen Entschlüsselungsalgorithmus aufweist. In dem Halbleiterbauelement wird ein Startwert A, insbesondere ein nicht geheimer Startwert A, abgelegt. Außerhalb des Halbleiterbauelements wird ein erster geheimer Wert B zusammen mit dem Startwert A zu einem ersten Chiffrat verschlüsselt. Das erste Chiffrat wird über die Kommunikationsschnittstelle auf das Halbleiterbauelement zwecks Entschlüsselung durch das Halbleiterbauelement übertragen. Nach erfolgreicher Entschlüsselung des ersten Chiffrats wird der Startwert A durch den ersten geheimen Wert B ersetzt. Außerhalb des Halbleiterbauelements wird dann ein zweiter geheimer Wert C zusammen mit dem ersten geheimen Wert B zu einem zweiten Chiffrat verschlüsselt, wobei das zweite Chiffrat über die Kommunikationsschnittstelle auf das Halbleiterbauelement zwecks Entschlüsselung durch das Halbleiterbauelement übertragen wird. Nach erfolgreicher Entschlüsselung des zweiten Chiffrats wird der erste geheime Wert B durch den zweiten geheimen Wert C ersetzt wird.

## Beschreibung

Die Erfindung betrifft ein Verfahren zum Übertragen von geheimen Daten auf ein Halbleiterbauelement, insbesondere auf einen Halbleiterchip.

Verfahren zum Einbringen von geheimen Daten in Halbleiterbauelemente, insbesondere in Halbleiterchips, sind aus der Praxis grundsätzlich bekannt. Die geheimen Daten werden bei der Produktion der Halbleiterchips über eine Schnittstelle in diese Halbleiterchips eingebracht. Entscheidend bei diesen aus der Praxis bekannten Verfahren ist, dass der Schlüssel, mit dem die Daten jeweils verschlüsselt werden, geheim gehalten werden muss. Nachteilig ist dabei, dass für eine große Anzahl von Halbleiterbauelementen eine entsprechende Zahl von geheimen Schlüsseln aufwendig verwaltet werden muss. Die dafür erforderlichen Vorkehrungen bewirken eine deutliche Verteuerung der Herstellung der Halbleiterbauelemente. Erlangen Dritte Kenntnis von den geheimen Schlüsseln, ist eine Manipulation der Halbleiterbauelemente durch Dritte möglich. Durch Kenntnis des Schlüssels wäre beispielsweise die Manipulation von Steuergeräten in Kraftfahrzeugen möglich.

Der Erfindung liegt demgegenüber das technische Problem zugrunde, ein Verfahren anzugeben, mit dem geheime Daten auf ein Halbleiterbauelement übertragen werden können, das ohne einen herstellungsseitigen, geheimen Schlüssel auskommt und das einfach und sicher durchführbar ist.

Zur Lösung dieses technischen Problems lehrt die Erfindung ein Verfahren zum Übertragen von geheimen Daten auf ein Halbleiterbauelement, insbesondere auf einen Halbleiterchip, wobei das Halbleiterbauelement zumindest eine Kommunikationsschnittstelle sowie zumindest einen Entschlüsselungsalgorithmus aufweist, wobei in dem Halbleiterbauelement ein Startwert A, insbesondere ein nicht geheimer Startwert A abgelegt wird, wobei außerhalb des Halbleiterbauelementes ein erster geheimer Wert B zusammen mit dem Startwert A zu einem ersten Chiffrat verschlüsselt wird und wobei das erste Chiffrat über die Kommunikationsschnittstelle auf das Halbleiterbauelement zwecks Entschlüsselung durch das Halbleiterbauelement übertragen wird, wobei nach erfolgreicher Entschlüsselung des ersten Chiffrats der Startwert A durch den ersten geheimen Wert B ersetzt wird, wobei außerhalb des Halbleiterbauelementes ein zweiter geheimer Wert C zusammen mit dem ersten geheimen Wert B zu einem zweiten Chiffrat verschlüsselt wird und wobei das zweite Chiffrat über die Kommunikationsschnittstelle auf das Halbleiterbauelement zwecks Entschlüsselung durch das Halbleiterbauelement übertragen wird, und wobei nach erfolgreicher Entschlüsselung des zweiten Chiffrats der erste geheime Wert B durch den zweiten geheimen Wert C ersetzt wird.

Der Startwert A wird nach dem Entschlüsseln des ersten Chiffrats durch den geheimen Wert B ersetzt, so dass zu diesem Verfahrensstand bevorzugt ausschließlich der Wert B in dem Halbleiterbauelement gespeichert ist. Mit anderen Worten wird in einer bevorzugten Ausführungsform des Verfahrens der Startwert A durch den entschlüsselten, geheimen Wert B überschrieben. Nach der Entschlüsselung des zweiten Chiffrats wird der in dem Halbleiterbauelement abgelegte geheime Wert B zweckmäßigerweise persistent durch den Wert C ersetzt. Es hat sich bewährt, dass der geheime Wert C bei weiteren Datenübertragungen auf das Halbleiterbauelement unverändert bleibt. Es empfiehlt sich, dass die in das Halbleiterbauelement übertragenen Werte und/oder Chiffrate nicht mehr über die Kommunikationsschnittstelle abrufbar sind.

Es liegt im Rahmen der Erfindung, dass die Entschlüsselung des ersten Chiffrats auf Basis des in dem Halbleiterbauelement abgelegten Startwertes A erfolgt. Die Entschlüsselung des ersten Chiffrates liefert vorzugsweise die Werte A' und B'. Es empfiehlt sich, dass nach dem Entschlüsseln des ersten Chiffrats der Startwert A mit dem entschlüsselten Wert A' verglichen wird. Wird keine Übereinstimmung zwischen dem Startwert a und dem entschlüsselten Wert A' festgestellt, bleibt zweckmäßigerweise der Startwert A in dem Halbleiterbauelement erhalten. Die Werte A' und B' werden in diesem Fall nicht in dem Halbleiterbauelement gespeichert. Stimmt der entschlüsselte Wert A' mit dem Startwert A überein, so wird der Wert B' abrufbereit als Wert B in dem Halbleiterbauelement abgelegt. In einer bevorzugten Ausführungsform des Verfahrens wird der Wert B in dem Halbleiterbauelement gespeichert und besonders bevorzugt temporär gespeichert. Wird nach der Entschlüsselung des ersten Chiffrates zweckmäßigerweise viermal, vorzugsweise dreimal und insbesondere zweimal eine Differenz zwischen dem Startwert A und dem entschlüsselten Wert A' ermittelt, so wird bevorzugt die Funktionsfähigkeit des Halbleiterbauelements irreversibel geschädigt.

Es liegt im Rahmen der Erfindung, dass das Verfahren bei nicht erfolgreicher Entschlüsselung des ersten Chiffrates abgebrochen wird. Sollte die Entschlüsselung des ersten Chiffrats scheitern, beispielsweise unterbrechungsbedingt durch einen Stromausfall, so kehrt das Halbleiterbauelement zweckmäßigerweise ohne Speicherung des ersten Chiffrates in den Ausgangszustand zurück. Ausgangszustand meint insbesondere den Zustand, in dem ausschließlich der Startwert A in dem Halbleiterbauelement abgelegt ist.

Es liegt weiterhin im Rahmen der Erfindung, dass die Entschlüsselung des zweiten Chiffrats auf Basis des in dem Halbleiterbauelement abgelegten ersten geheimen Wertes B erfolgt. Die Entschlüsselung des zweiten Chiffrats liefert vorzugsweise die geheimen Werte B* und C*. Wird nach der Entschlüsselung des zweiten Chiffrates durch Vergleichen des entschlüsselten Wertes B* mit dem in dem Halbleiterbauelement bereitgehaltenen Wert B vorzugsweise zumindest viermal, bevorzugt zumindest dreimal und besonders bevorzugt zweimal eine Differenz bzw. Abweichung ermittelt, empfiehlt es sich, dass die Funktionsfähigkeit des Halbleiterbauelements irreversibel geschädigt wird. Auf diese Weise wird im Rahmen der Erfindung möglichen Versuchen vorgebeugt, durch Probieren unberechtigt einen Austausch von Werten in dem Halbleiterbauelement durchzuführen. Bei Übereinstimmung des entschlüsselten Wertes B* mit dem in dem Halbleiterbauelement bereitgehaltenen Wert B erfolgt empfohlenermaßen eine Umkodierung des Wertes C*, der dann vorzugsweise als Wert C abgelegt wird. Zweckmäßigerweise wird der in dem Halbleiterbauelement gespeicherte Wert B durch den Wert C ersetzt, so dass weitere Entschlüsselungen bevorzugt auf Basis des Wertes C durchgeführt werden können.

Es liegt im Rahmen der Erfindung, dass das Verfahren bei nicht erfolgreicher Entschlüsselung des zweiten Chiffrates abgebrochen wird. Sollte die Entschlüsselung des zweiten Chiffrates scheitern, beispielsweise durch einen Stromausfall bedingt, kehrt das Halbleiterbauelement zweckmäßigerweise in den Ausgangszustand zurück.

In einer bevorzugten Ausführungsform der Erfindung wird der Startwert A nur temporär durch den ersten geheimen Wert B ersetzt und persistent durch den zweiten geheimen Wert C ersetzt. Es hat sich bewährt, den Startwert A nach der Entschlüsselung des ersten Chiffrates und der Feststellung der Übereinstimmung des Startwertes A mit dem entschlüsselten Wert A' nicht durch den Wert B zu überschreiben. Der geheime Wert B wird vorzugsweise temporär in dem Halbleiterbauelement gespeichert. Auf Basis des temporär gespeicherten Wertes B wird dann in einer bevorzugten Ausführungsform der Erfindung das zweite Chiffrat entschlüsselt. Zweckmäßigerweise überprüft das Halbleiterbauelement, ob das zweite Chiffrat erfolgreich entschlüsselt wurde. Der temporär gespeicherte Wert B wird bei festgestelltem Entschlüsselungserfolg bzw. Übereinstimmung von B* mit B empfohlenermaßen gelöscht und der Startwert A im Rahmen der Erfindung durch den Wert C persistent ersetzt. Verläuft die Entschlüsselung des zweiten Chiffrats erfolglos, kehrt das Halbleiterbauelement bevorzugt in den Ausgangszustand zurück. Besonders bevorzugt wird der temporär gespeicherte Wert B bei erfolgloser Entschlüsselung des zweiten Chiffrats gelöscht. Auf diese Weise wird ausgeschlossen, dass ein unberechtigter Dritter auf Basis des nicht geheimen Wertes A in Kenntnis des Wertes B gelangen kann. Mit anderen Worten führt ein Abbruch bei der Entschlüsselung bzw. eine erfolglose Entschlüsselung des zweiten Chiffrats dazu, dass alle gegenüber dem Ausgangszustand in dem Halbleiterbauelement gespeicherten geheimen Werte gelöscht werden.

Es liegt im Rahmen der Erfindung, dass die vorstehend beschriebene mindestzweimalige Entschlüsselung eines Chiffrates auch mehr als zweimal, beispielsweise dreimal oder viermal entsprechend durchgeführt wird. - Vorzugsweise wird außerhalb des Halbleiterbauelements ein dritter geheimer Wert D zusammen mit dem zweiten geheimen Wert C zu einem dritten Chiffrat verschlüsselt, wobei das dritte Chiffrat über die Kommunikationsschnittstelle auf das Halbleiterbauelement zwecks Entschlüsselung durch das Halbleiterbauelement übertragen wird und wobei nach erfolgreicher Entschlüsselung des dritten Chiffrats der zweite geheime Wert C beibehalten wird und der dritte geheime Wert D in dem Halbleiterbauelement gespeichert wird. Die Entschlüsselung des dritten Chiffrates liefert bevorzugt die Werte D¹ und C¹. Es liegt im Rahmen der Erfindung, dass eine Speicherung des Wertes D¹ als D in dem Halbleiterbauelement dann erfolgt, wenn der entschlüsselte Wert C¹ mit dem in dem Halbleiterbauelement gespeicherten Wert C übereinstimmt. Der Transfer weiterer Werte bzw. Daten auf das Halbleiterbauelement erfolgt bevorzugt in der Weise, dass diese Werte bzw. Daten mit dem Wert C verschlüsselt werden und dann auf das Halbleiterbauelement übertragen werden. Der Wert C in dem Halbleiterbauelement wird empfohlenermaßen nicht mehr überschrieben bzw. durch weitere Werte bzw. Daten ersetzt.

Es hat sich bewährt, dass die Verschlüsselung zu dem ersten Chiffrat und/oder die Verschlüsselung zu dem zweiten Chiffrat und/oder die Verschlüsselung zu dem dritten Chiffrat mit einem symmetrischen Algorithmus, vorzugsweise mit einem AES-Algorithmus durchgeführt wird. Es liegt im Rahmen der Erfindung, dass die Verschlüsselung außerhalb des Halbleiterbauelements erfolgt. Die Werte bzw. Daten werden also zunächst verschlüsselt und dann auf das Halbleiterbauelement übertragen. Grundsätzlich kann die Verschlüsselung auch mit asymmetrischen Algorithmen, beispielsweise nach einem RSA- oder EC-Verfahren, erfolgen.

Es empfiehlt sich, das erste Chiffrat und/oder das zweite Chiffrat und/oder das dritte Chiffrat in dem Halbleiterbauelement mit einem symmetrischen Algorithmus, vorzugsweise mit einem AES-Algorithmus zu entschlüsseln. Zweckmäßigerweise verwendet das Halbleiterbauelement den gleichen Algorithmus zur Verschlüsselung und zur Entschlüsselung der Chiffrate. Grundsätzlich ist die Entschlüsselung auch mit asymmetrischen Algorithmen, beispielsweise im Rahmen des RSA- oder EC-Verfahren, möglich.

Nach besonders bevorzugter Ausführungsform wird die Kommunikationsschnittstelle des Halbleiterbauelements als eine Kommandoerweiterung einer JTAG-Schnittstelle ausgestaltet. Grundsätzlich liegen aber auch Ausführungsformen mit anderen Schnittstellen im Rahmen der Erfindung.

Der Erfindung liegt die Erkenntnis zugrunde, dass mit dem erfindungsgemäßen Verfahren ein sicherer Transfer geheimer Daten auf ein Halbleiterbauelement durchführbar ist, wobei in dem Halbleiterbauelement zunächst ein bekannter bzw. nicht geheimer Startwert abgelegt ist. Bei der Herstellung des Halbleiterbauelements ist also keine kostenintensive Geheimhaltung des Startwertes oder eine aufwendige Individualisierung der Halbleiterbauelemente mit verschiedenen geheimen Startwerten erforderlich. Dadurch, dass die Verschlüsselung und/oder der Transfer geheimer Daten auf ein Halbleiterbauelement von der Herstellung des Halbleiterbauelements abgekoppelt wird, werden somit beachtliche Vorteile erreicht und insbesondere die Herstellungskosten im Vergleich zu den aus dem Stand der Technik bekannten Maßnahmen deutlich gesenkt. Der erfindungsgemäße, zumindest zweifache Austausch der auf das Halbleiterbauelement übertragenen Werte bzw. Schlüssel gewährleistet einen sicheren Schutz gegenüber dem Zugriff Dritter auf das Halbleiterbauelement. Auf diese Weise können unerlaubte Manipulationen an dem Halbleiterbauelement sicher ausgeschlossen werden. Zudem garantiert das erfindungsgemäße Verfahren auch die erfolgreiche Abwehr von Manipulationsversuchen durch Dritte, wenn diese versuchen den Schlüssel durch Probieren zu bestimmen. Folglich zeichnet sich das erfindungsgemäße Verfahren durch eine hohe Sicherheit aus, da ausschließlich derjenige Daten auf das Halbleiterbauelement transferieren kann, der im Besitz des Schlüssels ist. Wesentlich an der Erfindung ist fernerhin, dass das Halbleiterbauelement bei erfolglosen Entschlüsselungen zu dem Startwert zurückkehrt. Im Ergebnis wird dabei eine unkontrollierte Weitergabe bzw. Veränderung des Schlüssels vermieden. Mit dem erfindungsgemäßen Verfahren wird nicht nur ein höchsten Sicherheitsansprüchen genügender Schlüssel, sondern auch weitere Datensätze funktionssicher auf das Halbleiterbauelement übertragen. Eine unerwünschte Einflussnahme durch Dritte wird dabei zu jedem Zeitpunkt zuverlässig vermieden. Die Kommunikation mit dem Halbleiterbauelement erfolgt nichtsdestoweniger einfach und problemlos, insbesondere über technisch übliche Schnittstellen.

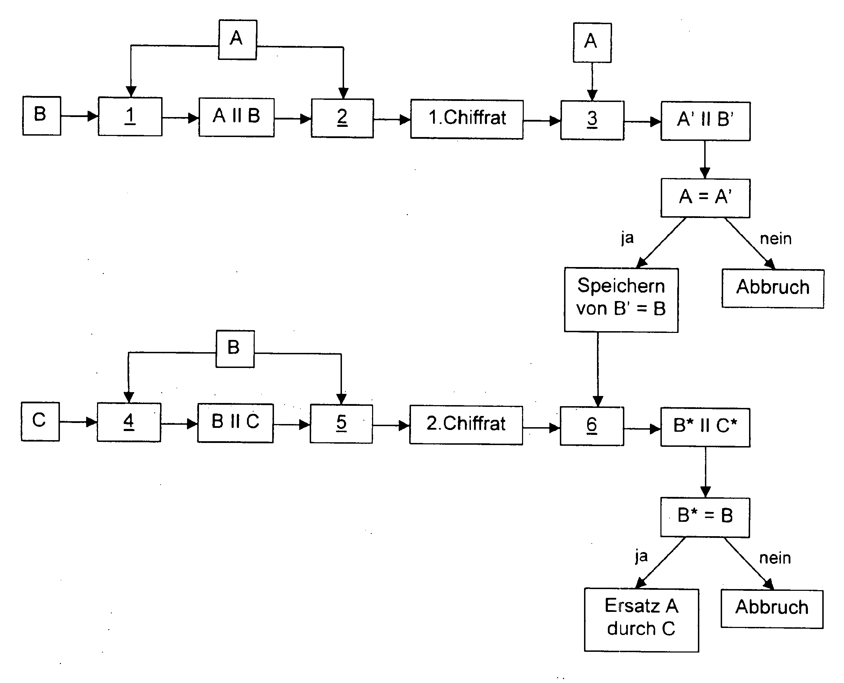

Nachfolgend wird die Erfindung anhand einer lediglich ein Ausführungsbeispiel darstellenden Zeichnung beschrieben. Die einzige Figur zeigt schematisch einen Ablauf des erfindungsgemäßen Verfahrens.

In einem ersten Schritt des in dem Ausführungsbeispiel dargestellten Verfahrens wird ein geheimer Wert B außerhalb eines Halbleiterbauelements mit einem Wert A konkateniert (Konkatenation 1). Daraufhin werden die vereinigten Werte A und B auf Basis des Wertes A vorzugsweise mit einem AES-Algorithmus verschlüsselt (AES-Verschlüsselung 2), so dass sie ein erstes Chiffrat bilden. Dieses erste Chiffrat wird auf das Halbleiterbauelement mittels einer nicht dargestellten Kommunikationsschnittstelle übertragen, in dem als Startwert der nicht geheime Wert A abgelegt ist. Die Entschlüsselung des ersten Chiffrates in dem Halbleiterbauelement erfolgt zweckmäßigerweise ebenfalls mit einem AES-Algorithmus (AES-Entschlüsselung 3). Bei der Entschlüsselung werden die Werte A' und B' erhalten. In dem Halbleiterbauelement wird der Erfolg der Entschlüsselung überprüft, was in der Figur nicht im Einzelnen dargestellt ist. Nur im Erfolgsfall der Entschlüsselung wird der Wert A' mit dem Startwert A des Halbleiterbauelementes verglichen. Im Misserfolgsfall verwirft das Halbleiterbauelement das erste Chiffrat mit der Maßgabe, das ausschließlich der Startwert A in dem Halbleiterbauelement gespeichert bleibt. Wird in dem Halbleiterbauelement eine Übereinstimmung von A' und A festgestellt, so stimmen im Rahmen der Erfindung auch die geheimen Werte B' und B miteinander überein. Der geheime Wert B' wird dann bevorzugt als geheimer Wert B in dem Halbleiterbauelement temporär gespeichert. Mit anderen Worten sind dann die Werte A und B in dem Halbleiterbauelement gespeichert.

In einem zweiten Schritt des in dem Ausführungsbeispiel dargestellten Verfahrens wird außerhalb des Halbleiterbauelements ein geheimer Wert C mit dem Wert B konkateniert (Konkatenation 4) und auf Basis des Wertes B vorzugsweise mit einem AES-Algorithmus zu einem zweiten Chiffrat verschlüsselt (AES-Verschlüsselung 5). Das zweite Chiffrat wird auf das Halbleiterbauelement über eine nicht dargestellte Kommunikationsschnittstelle übertragen, in welchem Halbleiterbauelement der Wert A abgelegt und der geheime Wert B bevorzugt temporär gespeichert ist. Auf Basis des bevorzugt temporär gespeicherten Wertes B wird das zweite Chiffrat vorzugsweise durch einen AES-Algorithmus entschlüsselt (AES-Entschlüsselung 6), so dass die Werte B* und C* erhalten werden. Bei erfolgloser Entschlüsselung verwirft das Halbleiterbauelement die im Rahmen des Verfahrens in dem Halbleiterbauelement gespeicherten und/oder auf das Halbleiterelement übertragenen Daten, so dass zweckmäßigerweise ausschließlich der Startwert A erhalten bleibt. Bei erfolgreicher Entschlüsselung des zweiten Chiffrates werden in dem Halbleiterbauelement der aus dem zweiten Chiffrat stammende Wert B* und der vorzugsweise temporär in dem Halbleiterbauelement gespeicherte Wert B miteinander verglichen. Wird dabei festgestellt, dass die Werte B* und B verschieden sind, wird das Verfahren mit der Maßgabe abgebrochen, dass vorzugsweise ausschließlich der Startwert A in dem Halbleiterbauelement erhalten bleibt. Wird die Identität von B* und B festgestellt, dann ist auch der Wert C* mit dem Wert C identisch. Zweckmäßigerweise wird dann der Wert A persistent durch den Wert C ersetzt. Mit anderen Worten wird der nicht geheime Wert A durch den geheimen Wert C irreversibel ersetzt. Es empfiehlt sich, dass der vorzugsweise temporär gespeicherte Wert B gelöscht wird, wenn der Wert A durch den Wert C überschrieben wird.

Gemäß einer Ausführungsform der Erfindung können weitere Werte bzw. Daten D in einem dritten, in der Figur nicht gezeigten Schritt auf das Halbleiterbauelement übertragen werden, wobei diese Werte bzw. Daten D mit dem Wert C vorzugsweise mit einem AES-Algorithmus zu einem dritten Chiffrat verschlüsselt werden. Dieses dritte Chiffrat wird dann empfohlenermaßen ebenfalls über die Kommunikationsschnittstelle auf das Halbleiterbauelement übertragen. In dem Halbleiterbauelement wird das dritte Chiffrat vorzugsweise mit einem AES-Algorithmus entschlüsselt und dann wird in dem Halbleiterbauelement der Erfolg der Entschlüsselung überprüft. Bei erfolgreicher Entschlüsselung werden bevorzugt die entschlüsselten Werte C" und D" erhalten. Anschließend wird zweckmäßigerweise der Wert C" mit dem in dem Halbleiterbauelement persistent gespeicherten Wert C verglichen. Wird eine Übereinstimmung der Werte C" und C festgestellt, dann stimmen auch die Werte D" und D überein. Neben dem geheimen Wert C wird empfohlenermaßen der Wert D in dem Halbleiterbauelement gespeichert. Bei fehlender Übereinstimmung der Werte C" und C wird das übertragene dritte Chiffrat zweckmäßigerweise vernichtet.

Nach einer weiteren Ausführungsform der Erfindung können weitere Werte bzw. Daten X in einem n-ten Schritt (n = 4, 5, 6, 7 .....) auf das Halbleiterbauelement übertragen werden und es wird dann entsprechend der vorstehend beschriebenen Weise verfahren.

## Patentansprüche

1. Verfahren zum Übertragen von geheimen Daten auf ein Halbleiterbauelement, insbesondere auf einen Halbleiterchip,
wobei das Halbleiterbauelement zumindest eine Kommunikationsschnittstelle sowie zumindest einen Entschlüsselungsalgorithmus aufweist,
wobei in dem Halbleiterbauelement ein Startwert A, insbesondere ein nicht geheimer Startwert A abgelegt wird,
wobei außerhalb des Halbleiterbauelementes ein erster geheimer Wert B zusammen mit dem Startwert A zu einem ersten Chiffrat verschlüsselt wird und
wobei das erste Chiffrat über die Kommunikationsschnittstelle auf das Halbleiterbauelement zwecks Entschlüsselung durch das Halbleiterbauelement übertragen wird,
wobei nach erfolgreicher Entschlüsselung des ersten Chiffrats der Startwert A durch den ersten geheimen Wert B ersetzt wird,
wobei außerhalb des Halbleiterbauelementes ein zweiter geheimer Wert C zusammen mit dem ersten geheimen Wert B zu einem zweiten Chiffrat verschlüsselt wird und wobei das zweite Chiffrat über die Kommunikationsschnittstelle auf das Halbleiterbauelement zwecks Entschlüsselung durch das Halbleiterbauelement übertragen wird
und wobei nach erfolgreicher Entschlüsselung des zweiten Chiffrats der erste geheime Wert B durch den zweiten geheimen Wert C ersetzt wird.

2. Verfahren nach Anspruch 1, wobei die Entschlüsselung des ersten Chiffrats auf Basis des in dem Halbleiterbauelement abgelegten Startwertes A erfolgt.

3. Verfahren nach einem der Ansprüche 1 oder 2, wobei das Verfahren bei nicht erfolgreicher Entschlüsselung des ersten Chiffrats abgebrochen wird.

4. Verfahren nach einem der Ansprüche 1 bis 3, wobei die Entschlüsselung des zweiten Chiffrats auf Basis des in dem Halbleiterbauelement abgelegten ersten geheimen Wertes B erfolgt.

5. Verfahren nach einem der Ansprüche 1 bis 4, wobei das Verfahren bei nicht erfolgreicher Entschlüsselung des zweiten Chiffrats abgebrochen wird.

6. Verfahren nach einem der Ansprüche 1 bis 5, wobei der Startwert A nur temporär durch den ersten geheimen Wert B ersetzt wird und persistent durch den zweiten geheimen Wert C ersetzt wird.

7. Verfahren nach einem der Ansprüche 1 bis 6, wobei außerhalb des Halbleiterbauelementes ein dritter geheimer Wert D zusammen mit dem zweiten geheimen Wert C zu einem dritten Chiffrat verschlüsselt wird und wobei das dritte Chiffrat über die Kommunikationsschnittstelle auf das Halbleiterbauelement zwecks Entschlüsselung durch das Halbleiterbauelement übertragen wird
und wobei nach erfolgreicher Entschlüsselung des dritten Chiffrats der zweite geheime Wert C beibehalten und der dritte Wert D in dem Halbleiterbauelement gespeichert wird.

8. Verfahren nach einem der Ansprüche 1 bis 7, wobei die Verschlüsselung zu dem ersten Chiffrat und/oder die Verschlüsselung zu dem zweiten Chiffrat und/oder die Verschlüsselung zu dem dritten Chiffrat mit einem symmetrischen Algorithmus, vorzugsweise mit einem AES-Algorithmus durchgeführt wird.

9. Verfahren nach einem der Ansprüche 1 bis 8, wobei das erste Chiffrat und/oder das zweite Chiffrat und/oder das dritte Chiffrat in dem Halbleiterbauelement mit einem symmetrischen Algorithmus, vorzugsweise mit einem AES-Algorithmus entschlüsselt wird.

10. Verfahren nach einem der Ansprüche 1 bis 9, wobei die Kommunikationsschnittstelle des Halbleiterbauelements als eine Kommandoerweiterung einer JTAG-Schnittstelle ausgestaltet wird.

## Geänderte Patentansprüche

### Geänderte Patentansprüche gemäss Regel 137(2) EPÜ.

**1.** Verfahren zum Übertragen von geheimen Daten auf ein Halbleiterbauelement, insbesondere auf einen Halbleiterchip,
wobei das Halbleiterbauelement zumindest eine Kommunikationsschnittstelle sowie zumindest einen Entschlüsselungsalgorithmus aufweist,
wobei in dem Halbleiterbauelement ein Startwert A, insbesondere ein nicht geheimer Startwert A abgelegt wird,
wobei außerhalb des Halbleiterbauelements ein erster geheimer Wert B zusammen mit dem Startwert A zu einem ersten Chiffrat verschlüsselt wird und wobei das erste Chiffrat über die Kommunikationsschnittstelle auf das Halbleiterbauelement zwecks Entschlüsselung durch das Halbleiterbauelement übertragen wird,
wobei nach erfolgreicher Entschlüsselung des ersten Chiffrats der Startwert A durch den ersten geheimen Wert B nur temporär ersetzt wird,
wobei außerhalb des Halbleiterbauelements ein zweiter geheimer Wert C zusammen mit dem ersten geheimen Wert B zu einem zweiten Chiffrat verschlüsselt wird und wobei das zweite Chiffrat über die Kommunikationsschnittstelle auf das Halbleiterbauelement zwecks Entschlüsselung durch das Halbleiterbauelement übertragen wird
und wobei nach erfolgreicher Entschlüsselung des zweiten Chiffrats der erste geheime Wert B durch den zweiten geheimen Wert C persistent ersetzt wird.
